# EUROPEAN PATENT APPLICATION

(11) **EP 2 053 385 A2**
(43) Date of publication of application: **29.04.2009**
(21) Application number: 08167054.9
(22) Date of filing: 20.10.2008
(51) Int. Cl.: G01N 21/77

(54) **Apparatus and method for detecting the presence of an agent**

(30) Priority: 22.10.2007 US 876476
(71) Applicant: Honeywell International Inc., Morristown, NJ 07962 (US)
(72) Inventor: Sanders, Glen A., Scottsdale, AZ 85255 (US); Lewis, Jeffrey E., Phoenix, AZ 85054 (US)
(74) Representative: Buckley, Guy Julian

(57) **Abstract**

An apparatus and method for detecting an agent utilizes a substrate, a waveguide on the substrate, a light source, a photo-detector, an optical coupler on the substrate, and a processor. The light source is configured to emit light into the waveguide. The photo-detector is configured to detect light. The optical coupler is configured to direct a first portion of light propagating from the waveguide towards the photo-detector and to direct a second portion of the light propagating from the waveguide back into the waveguide. The waveguide and the optical coupler at least partially form a resonator. A substance is at least one of embedded within the waveguide and adjacent to the waveguide. The substance is reactive to the agent. The processor detects a change in a resonance lineshape of the resonator caused by the reaction of the substance to the agent.

## Description

### TECHNICAL FIELD

The present invention generally relates to environment sensing or detecting, and more particularly relates to optical-based systems and methods for detecting the presence of a specific material, analyte, or agent.

### BACKGROUND

In recent years, the number of uses for devices with the ability to detect various substances has increased dramatically. In particular, greater emphasis has been placed on national homeland security, including the detection of various threats to human populations. Detecting or sensing the presence of undesirable hazardous materials in the environment, such as biological or chemical agents and sources of radioactivity, has become a priority. Such hazardous materials may be found in shipping containers, buildings, airports, or other locations and may be directed at inflicting civilian, as well as military, casualties. As such, there is a need to provide small, affordable devices that are capable of accurately detecting a wide range of hazardous materials.

Accordingly, it is desirable to provide a sensor capable of detecting biological agents, chemical agents, and/or radioactive materials. In addition, it is desirable to provide a sensor for detecting the presence of multiple and different hazards while minimizing the package size and manufacturing costs of the sensor. Furthermore, other desirable features and characteristics of the present invention will become apparent from the subsequent detailed description of the invention and the appended claims, taken in conjunction with the accompanying drawings and this background of the invention.

### BRIEF SUMMARY

In one embodiment, an apparatus for detecting an agent is provided. The apparatus includes a substrate, a waveguide on the substrate, a light source coupled to the waveguide and configured to emit light into the waveguide, a photo-detector coupled to the waveguide and configured to detect light, an optical coupler on the substrate and configured to direct a first portion of light propagating from the waveguide towards the photo-detector and to direct a second portion of the light propagating from the waveguide into a second waveguide, the second waveguide and the optical coupler forming a resonator, a substance being at least one of embedded within the waveguide and adjacent to the waveguide, the substance being reactive to the agent, and a processor in operable communication with the photo-detector to detect a change in a resonance lineshape of the resonator caused by said reaction of the substance to the agent.

In another embodiment, an apparatus for detecting an agent is provided. The apparatus includes a substrate, a waveguide having first and second opposing ends on the substrate, a light source on the substrate being operable to emit light into the waveguide, first and second photo-detectors on the substrate being arranged to capture light and configured to generate a signal representative thereof, first and second optical couplers on the substrate, the first optical coupler being arranged to direct at least some of the light propagating from the first end of the waveguide towards the first photo-detector and direct at least some of the light propagating from the first end of the waveguide back into the waveguide, the second optical coupler being arranged to direct at least some of the light propagating from the second end of the waveguide towards the second photo-detector and direct at least some of the light propagating from the second end of the waveguide back into the waveguide, the waveguide and the first and second optical couplers at least partially forming a resonator, a material being at least one of embedded within and adjacent to at least a portion of the waveguide having a substance embedded therein, the substance being reactive to the agent, wherein the agent is one of a biological, chemical, and biochemical agent, and a processor on the substrate and in operable communication with the first and second photo-detectors and configured to detect a change in a resonance lineshape of the resonator caused by said reaction of the substance to the agent.

In another embodiment, a method for detecting an agent is provided. A waveguide having first and second opposing ends is formed on a substrate. A substance is positioned at least one of within the waveguide and adjacent to the waveguide. The substance is reactive to the agent. Light is directed into the first end of the waveguide. The light propagates through the waveguide and from the second end thereof. A first portion of the light propagating from the second end of the waveguide is directed back into the waveguide to be emitted from the first end thereof. A second portion of the light propagating from the second end of the waveguide is captured. A first portion of the light propagating from the first end of the waveguide is directed back into the waveguide towards the second end thereof, the waveguide at least partially forming a resonator. A second portion of the light propagating from the first end of the waveguide is captured. A signal representative of a change in a resonance lineshape of the resonator caused by said reaction of the substance to the agent is generated.

### BRIEF DESCRIPTION OF THE DRAWINGS

The present invention will hereinafter be described in conjunction with the following drawing figures, wherein like numerals denote like elements, and

Figure 1 is a plan view of an apparatus for detecting an agent in accordance with an exemplary embodiment of the present invention;

Figure 2 is a cross-sectional view of a waveguide on the apparatus of Figure 1 taken along line 2-2;

Figure 3 is a plan view for an apparatus for detecting an agent in accordance with another embodiment of the present invention;

Figure 4 is a plan view of a portion of the apparatus of Figure 3; and

Figure 5 is a cross-sectional view of the portion of the apparatus of Figure 4 taken along line 5-5.

### DETAILED DESCRIPTION

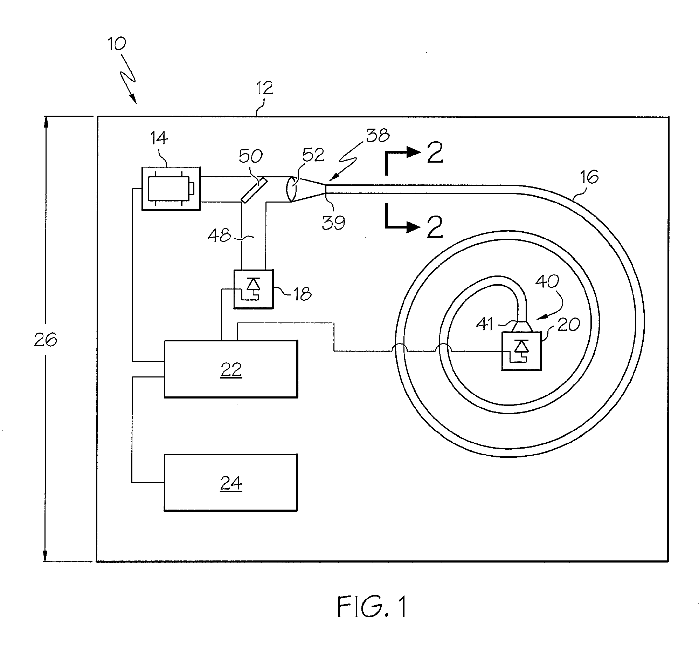

The following detailed description of the invention is merely exemplary in nature and is not intended to limit the invention or the application and uses of the invention. Furthermore, there is no intention to be bound by any theory presented in the preceding background of the invention or the following detailed description of the invention. It should also be noted that Figures 1 - 5 are merely illustrative and may not be drawn to scale.

An apparatus and method are provided for detecting an agent, such as a hazardous material (e.g.., biological, chemical, and biochemical agents) in an environment. The apparatus includes a substrate, a waveguide on (or in) the substrate, a first and second reflector formed on or near the first and second ends of the waveguide, a light source and photo-detector coupled to the waveguide, and a material adjacent to (or near) the waveguide. In one embodiment, reflectors are formed on or near the ends of the waveguide. The tunable wavelength light source is configured to emit light into the waveguide which reflects multiple times from both reflectors, thus forming an optical resonator. The photo-detector is configured to detect light escaping the waveguide through one of the reflectors. A substance is embedded within the material. The substance is reactive to the agent such that when the material is exposed to the agent, the resonance lineshape and/or the free spectral range (FSR) of the optical resonator is changed. The change in the FSR or lineshape is measured by changing the wavelength of the laser and monitoring the photo-detector. Alternatively, the material is omitted and a substance is embedded within the waveguide. The substance is reactive to the agent such that when the waveguide is exposed to the agent, the resonance lineshape and/or the free spectral range (FSR) of the optical resonator is changed. The change in the FSR is measured by changing the wavelength of the laser and monitoring the photo-detector. The light detected by the photo-detector changes its intensity when the laser wavelength is swept across over the cavity's FSR. By forming the waveguide on the substrate, as opposed to, for example, utilizing an optical fiber, a smaller, cheaper, and more reliable sensor may be provided.

Figure 1 illustrates a sensor 10 for detecting the presence of a particular substance or agent, according to one embodiment of the present invention. The sensor 10 includes a substrate 12 with a light source 14, a waveguide 16, first and second photo-detectors 18 and 20, a controller 22, and a transmitter 24 form thereon.

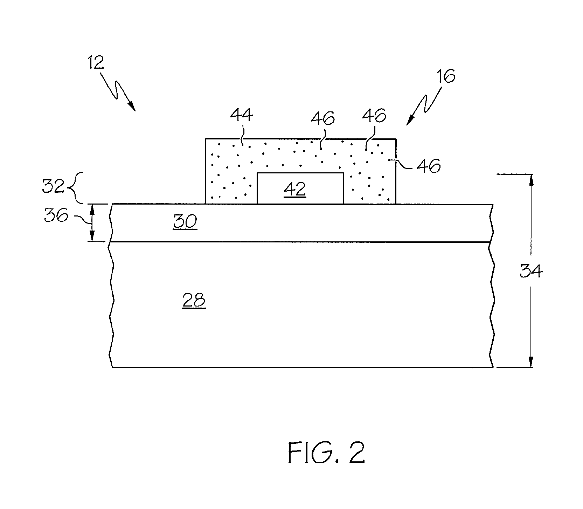

In one embodiment, the substrate 12 is substantially square (or rectangular) with a side length 26 of, for example, less than 4 cm, or between 1 and 3cm. Looking ahead to Figure 2, the substrate 12 includes a lower (or first) silicon layer 28, an insulating layer 30, and an upper (or second) silicon layer 32. The substrate 12 may have a thickness 34 of, for example, approximately 400 microns, most of which may be attributed to the thickness of the first silicon layer 28. The insulating layer 30 may be made of an insulating material, such as silicon dioxide (SiO₂) and may be formed on the lower silicon layer 28. The insulating layer 30 may have a thickness 36 of, for example, between 1 and 5 microns. The upper silicon layer 32 may have a thickness similar to that of the insulating layer 30. The substrate 12 may thus be in the form of a silicon-on-insulator (SOI) substrate, as is commonly understood. The substrate 12, and/or the various layer within, as illustrated in Figure 2 may be formed using, for example, chemical vapor deposition (CVD), bonding, and thermal growth processes, or a combination thereof, as will be appreciated by one skilled in the art.

Referring again to Figure 1, the light source 14, in the depicted embodiment is positioned near a corner of the substrate 12 and oriented or "aimed" at an adjacent corner of the substrate 12. In one embodiment, the light source 14 is a laser diode or laser diode assembly partially formed or completely mounted onto the substrate 12. The laser diode may be fabricated separately and mounted on the substrate 12. Although not physically illustrated, the light source 14 may be in external cavity laser diode and may include a cavity-length modulation mechanism to tune and/or adjust the frequency of the laser light emitted therefrom, as is commonly understood. Additionally, other elements may be included with the light source 14 that are mounted or formed external to the laser cavity to shape or collimate the laser beam, such as one or more lenses.

Still referring to Figure 1, the waveguide 16 is formed on the substrate 12 and occupies a side of the substrate 12 opposite the light source 14, the controller 22, and the transmitter 24. As shown in Figure 1, the waveguide 16 includes a first end 38 that is aligned with the light source 14 and a second end 40 which is positioned near a central portion of a substrate 12. The waveguide 16 is arranged in a spiral shape and thus includes multiple turns between the first and second opposing ends 38 and 40. Referring again to Figure 2, the waveguide 16 is composed primarily of a silicon region of relatively high refractive index, i.e. the "core" region 42 which is formed from the upper silicon layer 32 of the substrate 12 and surrounding lower refractive-index regions. As is commonly understood, the core 42 may be formed from the upper silicon layer 32 using known semiconductor processing techniques such as patterning and etching. Still referring to Figure 2, in one embodiment, a permeable polymeric material 44, having an indicator substance 46 embedded therein, is formed over the core 42 of the waveguide 16. The polymeric material 44 may be an acrylate polymer, and the indicator substance, or reagent, 46 may be a chemical or other substance that reacts to one or more "agents" or analytes, such as biological, chemical, and biochemical agents. Examples include biological agents and chemical agents, or compounds (e.g., carbon monoxide, cyanide, chlorine, nerve agents, serine, and the like). The indicator substance 46 may change (or cause the material in which it is embedded to change) optical characteristics, for example, color, loss, index of refraction, or the like, when exposed to agents to which it is sensitive. As will be appreciated by one skilled in the art, the indicator substance 46 may be embedded within the polymeric material 44 during the formation thereof. Although not specifically illustrated, the first and second ends 38 and 40 of the waveguide 16 are formed such that they include reflective surfaces, or reflectors, 39 and 41, respectively, such that a linear optical resonator, or cavity, is formed therebetween. The reflectors 39 and 41 may serve as optical couplers, or circulators, that allow (or cause) light to be introduced (or directed) into the resonator, allow (or cause) light to be directed back through the resonator (i.e., "recirculated"), and/or allow (or cause) light to be directed out of the resonator to be detected. The wavelength of the light source 14 may be tuned over the free spectral range (FSR) of the cavity.

The first and second photo-detectors 18 and 20 are positioned on the substrate 12 near a central portion thereof. In a preferred embodiment, the first and second photo-detectors 18 and 20 each include a photodiode having a germanium-doped region formed on the substrate 12. In another embodiment, the photo-detectors 18 and 20 include discreet photo-detector chips made of, for example, silicon, germanium, or indium gallium arsenide phosphide (InGaAsP). As shown in Figure 1, the second photo-detector 20 is aligned with the second end 40 of the waveguide 16.

The controller 22 (or processing subsystem), in one embodiment, is formed on or within the substrate 12, and as will be appreciated by one skilled in the art, may include electronic components, including various circuitry and/or engraved circuits (e.g., a microprocessor and a power supply), such as an Application Specific Integrated Circuit (ASIC) and/or instructions stored on a computer readable medium to be carried out by the microprocessor to perform the methods and processes described below. As shown, the controller 22 is in operable communication with and/or electrically connected to the light source, the first and second photo detectors 18 and 20, and the transmitter 24. The transmitter 24 is formed on the substrate 12 and includes, for example, a radio frequency (RF) transmitter, as is commonly understood.

Still referring to Figure 1, the substrate 12 may be a "silicon optical bench," as is commonly understood, and include a series of trenches (or waveguides) 48, a reflector (or waveguide coupler) 50, and a lens 52 thereon. The trenches 48 interconnect the light source 14, the first end 38 of the waveguide 16, and the first photodiode 18. The reflector 50 (or beam splitter) is positioned between the light source 14 and the first end 38 of the waveguide 16 and is oriented to reflect at least some light from the first end of the waveguide 38 towards the first photo-detector 18. The lens 52 is positioned between the reflector 50 and the first end 38 of the waveguide 16 and it is shaped to focus light from the light source 14 into the first end 38 of the waveguide 16.

During operation, the sensor 10 is placed in an environment in which the detecting of a particular agent (i.e., the agent to which the particular indicator substance is sensitive) is desired (e.g., a shipping container, a building, on a soldier, etc.). The controller 22 activates the light source 14 to emit laser light towards the reflector 50. A portion of the light emitted from the light source 14 is transmitted by the reflector 50, focused by the lens 52, and enters the first end 38 of the waveguide 16. Referring to Figure 1 in combination with Figure 2, due to the differences in the indices of refraction of the core 42 of the waveguide 16 and the polymeric material 44, as well as the insulating layer 30 of the substrate 12, a substantial portion of the light propagates through the waveguide 16 and is guided by the core 42 of the waveguide 16. The light propagates through the waveguide 16, around the spiral structure thereof, and a portion of the light is emitted from the second end 40 of the waveguide 16, where it is captured by the second photo detector 20. Another portion of the light is reflected by the reflector 41. The reflected portion of the light propagates through the waveguide 16 in the reverse direction towards the first end 38 and the first reflector 39. A portion of the reflected light passes through the first end 38 of the waveguide while yet another portion is reflected back towards the second end 40.

When the sensor 10, or more particularly the polymeric material 44, is exposed to the particular agent to which the indicator 46 is sensitive, the indicator 46 undergoes a chemical change such that the effective index of refraction of the polymeric material 44 or the optical loss of the polymeric material 44 is altered. Thus, the FSR and/or the Finesse of the cavity is altered. The FSR and/or Finesse of the cavity is monitored by sweeping the wavelength of the laser over a range larger than the FSR of the cavity and monitoring the output of the photodiodes.

In one embodiment, exposure of the polymeric material 44 to the particular agent results in a change (e.g., an increase) in the index of refraction or the loss of the polymeric material 44, such that the coupling of the evanescent wave extending into the polymeric material 44 changes, resulting in more or less optical loss of the waveguide 16. Thus, the Finesse of the cavity is altered. The FSR and Finesse of the cavity can be established by sweeping the laser wavelength over the FSR of the cavity and monitoring the optical power emitted from the second end 40 of waveguide 16 with the second photo detector 20. Determining the frequency separation of two adjacent peak intensities will yield the FSR of the cavity. Measuring the width of the peaks in optical power will yield the FWHM of the resonance peaks and from this the Finesse of the cavity is calculated. The controller 22, or the processor therein, monitors and compares the FSR and Finesse of the cavity. When the FSR or Finesse changes by a predetermined amount, the controller 22 generates an alarm signal. The alarm signal is sent to the transmitter 24 where it may be transmitted via radio waves to a user or a computing system that is monitoring the sensor 10.

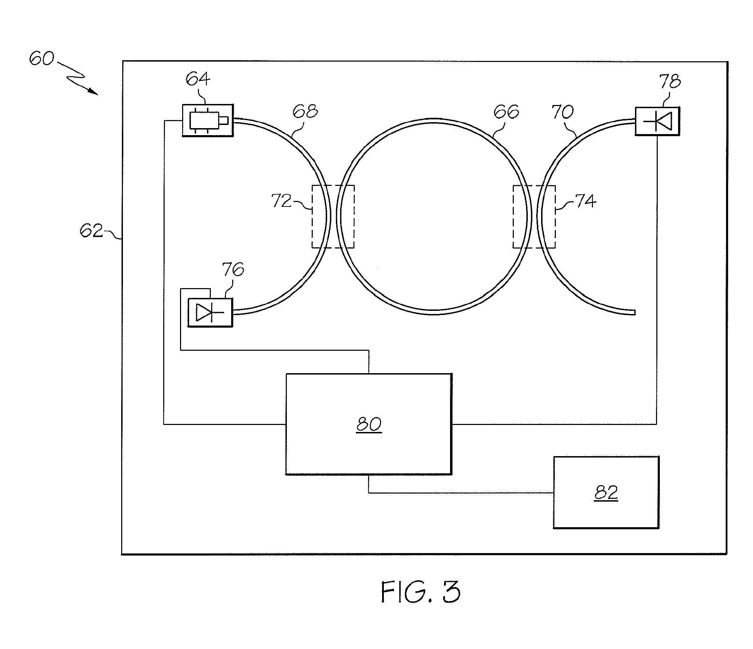

Figure 3 illustrates a sensor 60 for detecting a particular agent, according to another embodiment of the present invention, which incorporates a ring resonator configuration. The sensor 60 includes a substrate 62, which may be similar to substrate 12 described above. On the substrate 62 are a light source 64, a first waveguide 66, a second waveguide 68, a third waveguide 70, first and second evanescent couplers 72 and 74, first and second photo-detectors 76 and 78, a controller 80, and a transmitter 82. The first waveguide 66 is in the form of a ring, and the second and third waveguides 68 and 70 are on opposing sides of and adjacent to the first waveguide 68. The first evanescent coupler 72 is formed from (and between) the first and second waveguides 66 and 68, and the second evanescent coupler 74 is formed from the first and third waveguides 66 and 70.

In the embodiment shown in Figure 3, the light source 64 is positioned substantially in a corner of the substrate 62 and coupled to a first end of the second waveguide 68. As in the embodiment described above, the light source 64 may be, for example, a laser diode assembly, partially formed or mounted onto the substrate 62 as described above in connection with figure 1.

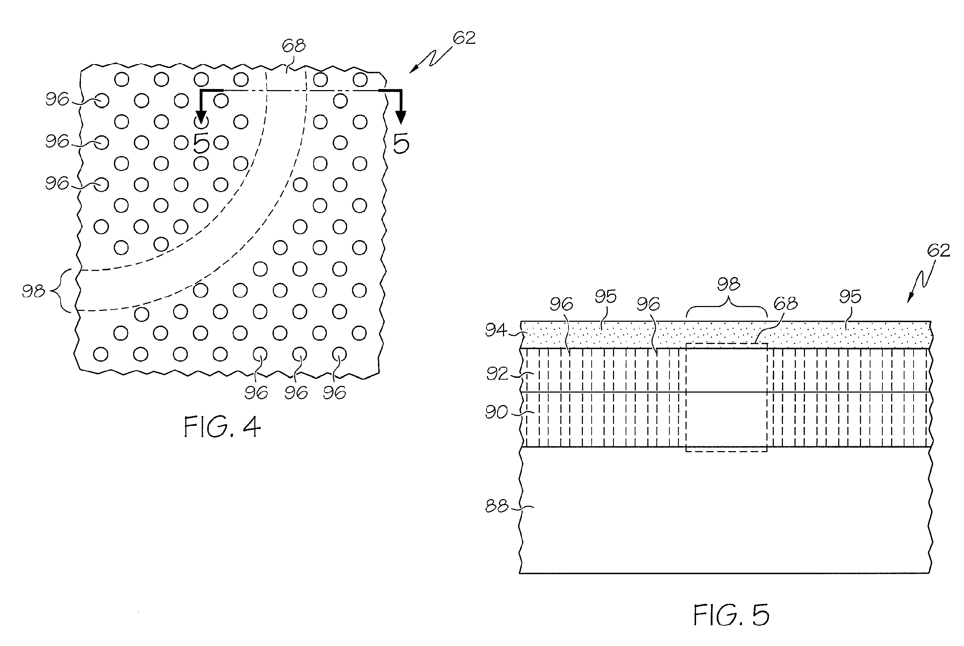

Figures 4 and 5 illustrate a portion of the substrate 62 and one of the waveguides (e.g., 68) in greater detail. Referring specifically to Figure 5, the substrate 62 includes a first (or lower) silicon layer 88, an insulating layer 90, a second (or upper) silicon layer 92, and an indicator layer 94. Thus, the substrate 62 shown in Figures 3, 4, and 5 may also be a SOI substrate, similar to that described above. The second silicon layer 92 is formed over the insulating layer 90, and the indicator layer 94 includes an indicator substance 95 embedded therein. The indicator layer 94 and the indicator substance 95 may be similar to the polymeric material 44 and the indicator substance 46 described above and shown in Figure 2. Thus in the embodiment shown in Figure 3, in one embodiment, a permeable polymeric material, having an indicator substance embedded therein, is formed over the waveguide 68. The indicator layer 94 may include an acrylate polymer, and the indicator substance, or reagent, 95 may be a chemical or other substance that reacts to one or more "agents" or analytes, such as biological, chemical, and biochemical agents (e.g., biological agents and chemical agents, or compounds as described above. The indicator substance 95 may change (or cause the material in which it is embedded to change) optical characteristics, for example, color, index of refraction, loss, or the like, when exposed to agents to which it is sensitive. The indicator substance 95 may be embedded within indicator layer 95 during the formation thereof. In the embodiment shown in Figure 5, the indicator layer 94 covers portions of the substrate 62 considerably greater than those occupied by the waveguide 68.

As shown in Figures 4 and 5, the substrate 62, in the depicted embodiment, also includes a plurality of holes 96 through layers 90 and 92 forming a photonic crystalline structure, or a photonic band gap periodic structure in the horizontal direction. The holes 96 may be formed using, for example, a dry etching process based on fluorocarbon discharge as is commonly understood. Region, or area, 98 on the substrate 62 is unoccupied by the holes 96 and defines the waveguide 68. It should be noted that in the waveguide 68 shown in Figures 4 and 5, the light is substantially confined within the second silicon layer 92 to a single special mode via an index difference (i.e., index guiding) in the vertical direction, and via the photonic band gap effect in the horizontal direction.
Referring again to Figure 3, as is commonly understood, the first evanescent coupler 72 is formed (i.e., the portions are waveguides 66 and 68 within the first coupler 72 are in a proximity) such that at least some of the light propagating in the second waveguide 68 is coupled into the first waveguide 66. Similarly the second evanescent coupler 74 is formed such that light from the first waveguide 66 is coupled into the third waveguide 70 and directed onto the photo-detector 78. As will be appreciated by one skilled in the art, a ring resonator is formed by the first waveguide 66 and the first and second couplers 72 and 74, as the first and second couplers 72 and 74 serve to couple light into and out of the resonant cavity 66. The controller 80 and the transmitter 82 may be similar to those described above. The controller 80 is in operable communication with the light source 64, the first and second photo-detectors 76 and 78, and the transmitter 82.

During operation, the sensor 60 is placed in an environment in which the detection of the particular agent is desired. Referring to Figure 3, the controller 80 activates the light source 64 such that the light source 64 emits light, such as laser light (e.g., with a wavelength of approximately 532, 633, 830, 1330, and/or 1550 nm), into the second waveguide 68. The laser light is coupled into the first waveguide 66 by means of the first evanescent coupler 72. The light in the first waveguide 66 circulates inside the ring allowing multiple couplings at the first and second couplers 72 and 74. Light coupled from the first waveguide 66 to the third waveguide 70 is directed onto the second photo-detector 78. The resulting signal is monitored and processed by the controller 80. In must be noted, that, because of high losses of visible light in silicon, alternative materials may be used to surround the hollow waveguide (a layer immediately below it [not shown], and the region housing the holes) area 68 such as silica, silicon dioxide, or other materials when using 532 nm light and 632 nm light..

The transmitted wave (i.e., the light captured by the second photo-detector 78) is a fraction of, and derived from, the recirculating light wave inside the first waveguide, or the resonator, 68. As the frequency of the light is detuned away from the resonance of the resonator 68, the transmitted portion becomes very small and only the reflected portion impinges on the first photo-detector 76, indicating a maximum intensity with very little destructive interference. As the frequency of the light is scanned through the center of the resonator resonance, the transmitted wave is maximized for the resonator 68 and it produces a maximum destructive interference with the reflected wave, thus providing a resonance dip having a minimum that is indicative of the resonance center.

To observe the resonance center-frequency of the resonator 68, the intensity at either the first photo-detector 76 or the second photo-detector 78 may be measured or a standard synchronous detection technique may be used. In the case of synchronous detection, the input light beam is sinusoidally phase-modulated, and therefore, frequency modulated at a frequency (fₘ) to dither the input beam frequency across a resonance lineshape as measured by the photo-detectors 76 and 78. For example, the controller ( or electronic circuitry) 80 may demodulate the output of the second photo-detector 78 at fₘ to measure the resonance center indicated by the light output of the circulating light beam. At a line center of the resonance lineshape, or the resonance center, the photo-detectors 76 and 78 detect a minimum output at the fundamental detection frequency fₘ and detect a maximum on either side of the lineshape near where the slope of the lineshape is greatest.

When the resonator 68 is off-resonance, an intensity signal maximum is observed at detector 76, but the signal at fₘ is substantially zero. To observe the line width of the resonance lineshape, the frequency of the light source 64 is monotonically scanned such that the light intensity signal on the second photo-detector 78 experiences at least a sequence of observing a half maximum followed by the maximum, and then another half maximum.

Alternatively, a second measure of the lineshape width may be measured by monitoring the frequency difference between maxima of the demodulated signal at fₘ, as the frequency of the light source 64 is scanned monotonically. In such a case, a measurement of the frequency width of the resonance between points of highest slope is proportional to the resonator line width, and thus proportional to the loss of the resonator 68. The light source 64 frequency excursion from half-maximum to half maximum (e.g., between points of highest slope) is the resonator line width (i.e., proportional to the resonator line width), which is indicative of the loss within the waveguide 68 and a measure of the presence of a hazardous material. Widening of the line width represents the presence of such an agent, or hazardous material, to which the particular indicator substance 95 (Figure 5) is sensitive.

Referring to Figure 3, the various optical components on the substrate 62, such as the evanescent couplers 72 and 76, may have feature sizes of as little as 10 microns, and as such may eliminate large bulk optics. By etching, forming, or placing the optical components and the controller 80 on the substrate 62, a substantially small, low cost silicon optical sensor may be manufactured that is advantageous for high volume production. Although the substrate and material system is preferably silicon, other materials (e.g., alumina, nitrides, III-V elements, other refractory materials, and the like) having suitable properties may be utilized for the substrate.

One advantage is that because the circuitry and the optical components are formed on a single substrate, in which conventional semiconductor processing techniques may be used, a small and relatively inexpensive hazardous material sensor is provided. Another advantage is that because the waveguide is formed on the substrate itself, along with the other components, the overall size of the device may be even further reduced, while improving durability and reliability.

Other embodiments may utilize radioactively-sensitive dopants, such as phosphorous (P) or boron (B), which are sensitive to at least one of alpha, beta, and gamma particles, and may be embedded within the waveguides themselves (i.e., within core 42 in Figure 2 and layer 92 in Figure 5). In such a way, radioactive particles may be detected as such particles alter the optical characteristics of the waveguides themselves.

It should be understood that various types of optical resonators may be used which utilize waveguides formed in various ways (e.g., waveguides formed on glass, waveguides embedded in LiNbO3, and waveguides formed from a cavity such as an etalon). As is commonly understood cavities used may be, for example, linear or standing wave cavities (e.g., formed by making the ends of the cavity reflective) and ring resonators.

As mentioned briefly above, the Finesse may be measured by sweeping the laser wavelength and monitoring the optical power "leaking" out of the cavity (i.e. looking at the signal from the second photo-detector). After the frequency of the laser is swept more than one FSR of the cavity, the frequency gap between peaks in the output of the cavity (Δλ). The laser may then be swept to measure the linewidth of the resonance peaks. The linewidth used may be the full width and half max (FWHM) of the peaks (δλ) (i.e., the frequency width of the peaks at half of the maximum amplitude of the peaks). The Finesse may then be calculated by taking the ratio of Δλ/ δλ. As such, changes in optical loss and/or index of refraction may change the line width and the FSR, and thus the Finesse.

The indicator substance may be on the outside of the waveguide, such as in a material that is adjacent to the waveguide. Such a use of the indicator substance may influence the evanescent coupling of the guided wave and increase the loss in the cavity, which may in turn change the Finesse of the cavity. If the indicator substance is embedded into the waveguide, when exposed to the analyte it is conceivable that the index of refraction in the waveguide may change without causing additional loss. In such an embodiment, the FSR may change and it may not be necessary to measure the Finesse.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An apparatus (10) for detecting an agent comprising:
a substrate (12);
a waveguide (16) having first and second opposing ends (38, 40) on the substrate;
a light source (14) on the substrate being operable to emit light into the waveguide;
first and second photo-detectors (18, 20) on the substrate being arranged to capture light and configured to generate a signal representative thereof;
first and second optical couplers (39, 41) on the substrate, the first optical coupler being arranged to direct at least some of the light propagating from the first end of the waveguide towards the first photo-detector and direct at least some of the light propagating from the first end of the waveguide back into the waveguide, the second optical coupler being arranged to direct at least some of the light propagating from the second end of the waveguide towards the second photo-detector and direct at least some of the light propagating from the second end of the waveguide back into the waveguide, the waveguide and the first and second optical couplers at least partially forming a resonator;
a material (44) being at least one of embedded within and adjacent to at least a portion of the waveguide having a substance (46) embedded therein, the substance being reactive to the agent, wherein the agent is one of a biological, chemical, and biochemical agent; and
a processor (22) on the substrate and in operable communication with the first and second photo-detectors and configured to detect a change in a resonance lineshape of the resonator caused by said reaction of the substance to the agent.

2. The apparatus (10) of claim 1, wherein the resonator is a linear resonator and the first and second optical couplers (39, 41) each comprise a reflective surface.

3. The apparatus (10) of claim 1, wherein the resonator is a ring resonator and the first and second optical couplers (39, 41) are evanescent couplers.

4. The apparatus (10) of claim 3, wherein said detection of the change in resonance lineshape comprises detection of a change in at least one of the free spectral range (FSR) of the resonator and the Finesse of the resonator.

5. The apparatus (10) of claim 4, wherein the substrate (12) comprises a silicon layer, the waveguide (16) is at least partially formed within the silicon layer, and the light source (14) is formed on the substrate.

6. A method for detecting an agent comprising:
forming a waveguide (16) having first and second opposing ends (38, 40) on a substrate (12);
positioning a material (44) having a substance (46) at least one of within the waveguide and adjacent to the waveguide, the substance being reactive to the agent;
directing light into the first end of the waveguide, the light propagating through the waveguide and from the second end thereof;
directing a first portion of the light propagating from the second end of the waveguide back into the waveguide to be emitted from the first end thereof;
capturing a second portion of the light propagating from the second end of the waveguide;
directing a first portion of the light propagating from the first end of the waveguide back into the waveguide towards the second end thereof, the waveguide at least partially forming a resonator;
capturing a second portion of the light propagating from the first end of the waveguide; and
generating a signal representative of a change in a resonance lineshape of the resonator caused by said reaction of the substance to the agent.

7. The method of claim 6, wherein the resonator is at least one of a linear resonator and a ring resonator.

8. The method of claim 7, wherein said change in resonance lineshape comprises detection of a change in at least one of the free spectral range (FSR) of the resonator and the Finesse of the resonator.

9. The method of claim 8, wherein the substrate (12) comprises a silicon layer, the waveguide (16) is at least partially formed within the silicon layer, and the silicon layer comprises at least one of a doped region and a plurality of holes therein forming a photonic crystal arrangement to create at least a portion of the waveguide.

10. The method of claim 9, wherein the material (44) is a permeable polymer-based material formed over the silicon layer.
